# FASCICULE DE BREVET EUROPEEN

(11) **EP 1 637 395 B1**
(45) Date de publication et mention de la délivrance du brevet: **02.05.2007**
(21) Numéro de dépôt: 05291917.2
(22) Date de dépôt: 16.09.2005
(51) Int. Cl.: B60Q 1/14

(54) **Projecteur pour véhicule automobile**
Kfz-Scheinwerfer
Headlamp for a vehicle

(30) Priorité: 21.09.2004 FR 0409983
(43) Date de publication de la demande: 22.03.2006
(73) Titulaire: VALEO VISION, 93012 Bobigny Cédex (FR)
(72) Inventeur: Wiegand, Boris, 78170 La Celle Saint Cloud (FR); Natter, Emilien, 94120 Fontenay Sous Bois (FR)
(74) Mandataire: Renous Chan, Véronique

(56) Documents cités:
- EP-A- 1 197 387
- EP-A- 1 213 532
- EP-A- 1 234 716
- EP-A- 1 431 118
- US-A- 3 628 120
- US-A1- 2003 169 158

## Description

La présente invention a pour objet un dispositif d'éclairage et/ou de signalisation du type projecteur pour véhicule automobile.

Elle concerne plus particulièrement les projecteurs automobiles présentant au moins une pièce ou un ensemble de pièces mobiles. Elle s'intéresse plus particulièrement, sans y être limitée, aux cas où les projecteurs comprennent un ou plusieurs modules optiques, par exemple de type elliptiques, au moins un de ces modules ayant un cache (ou écran) mobile.

En effet, schématiquement, un module optique comprend au moins une source lumineuse associée à au moins un réflecteur, ce module étant apte à générer un faisceau lumineux de photométrie donnée, par exemple un faisceau de type code/croisement ou un faisceau de type route. Ce module peut comprendre également un cache mobile, c'est-à-dire un composant ou groupe de composants qui est mobile à l'intérieur du module, et qui peut présenter au moins deux positions différentes par rapport à la source et/ou au réflecteur. Selon la position du cache, le module va alors pouvoir générer au moins deux faisceaux lumineux différents : on parle alors de module d'éclairage « bi-fonction » dans le cas où il peut générer deux faisceaux différentes, ou « multi-fonction » dans le cas où il peut générer au moins trois faisceaux différents. L'écran mobile permet, quand il est dans une position « active » ou « occultante » donnée, d'obtenir des faisceaux lumineux du type faisceaux à coupure, comme un faisceau de code ou d'anti-brouillard. On peut aussi prévoir que le cache mobile ait aussi une position « inactive », où il n'occulte pas la lumière émise par la source ou réfléchie par le réflecteur : le module peut alors aussi générer un faisceau sans coupure du type faisceau route. On peut ainsi avoir des modules optiques bi fonction code/route, bi fonction code trafic à droite/code trafic à gauche ; des modules tri-fonction code trafic à droite/code trafic à gauche/route. Ces modules multi fonction à cache mobile confèrent le grand avantage de l'adaptabilité et de la compacité aux projecteurs les intégrant.

On connaît ainsi du brevet EP 1 197 387 un module optique muni d'un système de cache monté mobile en rotation autour d'un axe incliné par rapport à un axe principal d'éclairage du module, qui permet d'obtenir avec un unique module au moins trois ou quatre fonctions différentes.

On connaît aussi du brevet FR 04 06273 déposé le 09 juin 2004, un module multifonction avec un système de cache mobile amélioré, où le bord optiquement actif du cache mobile est composé d'une pluralité de portions, une au moins de ces portions intervenant pour générer au moins deux faisceaux de photométries différentes, notamment deux faisceaux de coupures différentes. On obtient ainsi un cache qui, bien que compact, permet d'obtenir avec un unique module un nombre élevé de fonctions différentes, au-delà de quatre fonctions notamment. Un tel module optique selon le préambule de la revendication 1, un tel dispositif de commande du module optique selon le préambule de la revendication 12 et un tel procédé de commande du mouvement d'un écran mobile d'un module optique selon le préambule de la revendication 13 sont connus du document EP 1 213 532 A.

Mais quelque soit le système de cache mobile retenu, que son mouvement se fasse par rotation, pivotement ou translation, il est important de concevoir un système de commande du mouvement du cache qui soit précis et fiable. En effet, il est faut limiter au mieux tout risque d'inconfort visuel du conducteur quand on passe d'une fonction à une autre, et, bien sûr, éviter ou limiter au mieux tout risque d'éblouissement pour le conducteur du véhicule arrivant en sens inverse.

Pour assurer le mouvement de ces caches mobiles, on a usuellement recours à des actionneurs, le plus souvent sous forme de moteurs de type pas à pas. Dans de tels moteurs, on trouve notamment une unité de contrôle qui transmet à un bloc moteur des commandes pas à pas, de telle sorte qu'une tige moteur ne puisse évoluer qu'entre deux positions discrètes parfaitement définies, chacune des positions correspondant à un nombre de pas effectués. Cependant, dans le cas des caches mobile multi fonction, le nombre de positions discrète est élevé : comme on l'a vu, il peut être supérieur à trois ou quatre. Or plus le nombre de positions discrètes augmente, plus il est difficile d'assurer un positionnement exact de la tige du moteur.

L'invention a alors pour but la mise au point d'un système amélioré de commande par un actionneur d'une pièce mobile dans un module optique, système permettant notamment de mieux contrôler le mouvement du cache, de garantir un positionnement aussi fiable et exact que possible du cache selon la commande voulue.

L'invention a tout d'abord pour objet un module optique, notamment destiné à équiper des dispositifs d'éclairage et/ou de signalisation pour véhicule du type projecteur, le dit module comprenant au moins une source lumineuse associée à au moins un réflecteur et au moins un cache mobile apte à présenter au moins deux positions discrètes différentes au sein du module de façon à ce que ledit module génère au moins deux faisceaux lumineux correspondant de photométries différentes. Le suivi du positionnement dudit cache mobile utilise un système de marques pratiquées directement sur ledit cache mobile ou sur son support mobile associé.

Ce mode de suivi présente de nombreux avantages : il permet d'utiliser des capteurs optiques capables de détecter ce système de marquage, mais sans avoir à ajouter dans le module une source de lumière supplémentaire. Il permet, surtout, de détecter la position du cache de façon directe, et non pas « en amont » du cache, par exemple au niveau de la tige de l'actionneur ou des éléments de transmission mécanique éventuels entre la tige de l'actionneur et le cache ou son support. On peut ainsi détecter la position réelle de l'élément qui a directement un impact sur le faisceau lumineux émis par le module, à savoir le cache ou son support solidaire ou solidarisé à celui-ci.

Avantageusement, les marques sont des orifices pratiqués sur le cache mobile ou sur son support associé, chaque orifice ou groupement d'orifices donné correspondant à une position discrète donnée du cache. On place ces marques sur une zone optiquement « active », mais avec une localisation sur le cache et/ou un dimensionnement tels qu'elles n'affectent pas, ou pas significativement, ledit faisceau : on a ainsi avantage à placer ces marques dans la partie basse du cache, dans une zone éloignée du bord du cache définissant la coupure du faisceau. De cette façon, le risque de créer des rayons parasites à travers ces trous est minime, sans risque d'éblouissement pour un conducteur arrivant en direction opposée. Pour donner un ordre de grandeur, les marques peuvent être des trous circulaires d'un diamètre d'environ 0.5 mm à 1 mm. De préférence, ces marques de type orifices sont réparties successivement sur la longueur du cache mobile ou de son support mobile associé. On peut ainsi prévoir un détecteur optique approprié, qui, lui, est fixe dans le module, et qui « voit » défiler le cache et ses marques.

De préférence, toutes les marques ou groupements de marque sont identiques : on simplifie ainsi la conception du cache. Alternativement, ces marques ou groupements de marques servent à un codage optique distinct de chaque position discrète. Dans ce dernier cas, chaque position est repérée par des marques/orifices distincts, par exemple en forme et/ou nombre. On a alors un système de codage optique, par exemple de type binaire, où l'on a recours à plusieurs capteurs optiques associés travaillant simultanément afin de repérer chaque position définie sur l'écran par un groupement de marques données. On peut ainsi avoir un codage pour un écran à cinq positions, avec cinq codes différents du type 100, 110, 111, 011, 001 et trois capteurs associés pour détecter chaque position.

Avantageusement, le cache mobile est mû par un actionneur, du type moteur pas à pas, moteur piézoélectrique ou moteur à courant continu, qui est piloté par une unité de commande, notamment de type manuelle et/ou automatique. Les actionneurs de ce type sont en effet économiques et robustes. Mais on peut également utiliser des moteurs piézoélectriques ou des moteur à courant continu. La commande peut être manuelle : par exemple dans le cas où le conducteur veut passer d'un faisceau de type code à un faisceau de type route, ou d'un faisceau de type code trafic à droite à un faisceau code trafic à gauche. La commande peut également être automatisée, par exemple avec un système d'asservissement prenant en compte des données sur les conditions de roulage la route, transmises par des capteurs embarqués ou non dans le véhicule.

On peut utiliser un capteur optique, du type photodiode différentiel, pour détecter la présence des marques sur l'écran mobile ou sur son support associé. Le capteur est de préférence monté sur un bâti fixe par rapport au cache, entre la source lumineuse et le cache mobile ou, de préférence, du côté du cache qui est opposé au côté du cache faisant face à la source lumineuse, cette dernière configuration étant préférée pour que le capteur soit moins sollicité thermiquement. On place le capteur de façon à ce qu'il fasse face à la zone du cache munie du système de marquage, cette zone défilant en face du capteur selon les mouvements du cache.

L'invention s'applique avantageusement à tout type de cache mobile, et plus particulièrement à ceux décrits dans les deux brevets cités dans le préambule de la présente demande. Il s'agit notamment de caches montés mobiles en rotation par rapport à un axe incliné par rapport à la verticale ou par rapport à un axe principal d'éclairage, et de caches présentant un « bord actif » composé d'un ensemble de portions distinctes, au moins une partie d'une desdites portions intervenant pour définir au moins deux faisceaux lumineux de photométries différentes, notamment deux coupures différentes.

Le cache, suivant sa position dans le module, est apte à définir au moins deux des faisceaux suivants : faisceau de croisement en trafic à droite, faisceau de croisement en trafic à gauche, faisceau de ville, faisceau anti-brouillard, faisceau de route, faisceau pour conduite sur autoroute.

L'invention a également pour objet le dispositif d'éclairage du type projecteur pour automobile comprenant au moins un module optique défini plus haut.

L'invention a également pour objet un dispositif de commande du mouvement d'un écran mobile d'un module optique, ledit module comprenant au moins une source lumineuse associée à au moins un réflecteur et audit cache mobile, ledit cache mobile étant apte à présenter au moins deux positions discrètes différentes, notamment de façon à ce que ledit module génère au moins deux faisceaux lumineux correspondants de photométries différentes, tel que ledit dispositif de commande utilise :
- un organe de commande fonctionnant en mode manuel et/ou en mode automatique
- un actionneur de type moteur pas à pas apte à mouvoir le cache mobile d'une position discrète à une autre
- un système de marquage du cache mobile ou de son support mobile associé comprenant des marques ou groupements de marques associé(e)s à au moins une, notamment chaque position discrète du cache mobile
- un détecteur optique apte à détecter les marques du cache mobile ou de son support associé mobile, notamment dans les phases de mouvement du cache d'une position discrète vers une autre
- des moyens électroniques de comparaison, du type circuit intégré, aptes à comparer les données réelles détectées par le capteur à des données de référence.

On a ainsi un organe de commande du mouvement du cache qui vérifie à chaque passage du cache d'une position vers une autre que la position réelle du cache correspond à sa position discrète prédéterminée, position détectée en temps réel sans ou avec un minimum de tolérance.

L'invention a également pour objet un procédé de commande du mouvement d'un écran mobile d'un module optique, ledit module comprenant au moins une source lumineuse associée à au moins un réflecteur et audit cache mobile, ledit cache mobile étant apte à présenter au moins deux positions discrètes différentes de façon à ce que ledit module génère au moins deux faisceaux lumineux correspondants de photométries différentes, ledit procédé comportant au moins une étape de détection optique de marques pratiquées directement sur le cache mobile ou sur son support mobile associé.

Plus précisément, le procédé selon comprend avantageusement les étapes suivantes :
- commande de déplacement du cache mobile vers une position discrète donnée
- déplacement du cache mobile par l'actionneur suivant la commande de déplacement,
- détection du passage du cache d'une position discrète (N) à la position discrète suivante (N+1) par détection optique de marques pratiquées directement sur le cache mobile ou sur son support mobile associé.
- comparaison entre la position discrète réelle du cache obtenue par la détection optique et la position discrète préprogrammée (N+ 2) conforme à la commande lors du déplacement du cache d'une position discrète à une autre, jusqu'à ce que les deux positions coïncident
- arrêt du déplacement du cache par l'actionneur quand la position discrète réelle du cache mobile et la position discrète pré programmée conforme à la commande coïncident, ou passage en mode de défaillance du cache

Notamment quand l'étape de comparaison se prolonge de façon anormale, c'est-à-dire quand le comparateur n'arrive pas à établir que le cache est effectivement arrivé à la position discrète voulue, on prévoit avantageusement que le système de commande bascule vers un mode de défaillance prédéfini. Dans ce cas, on peut prévoir que l'actionneur déplace automatiquement le cache mobile jusqu'à une position discrète de sécurité, si la coïncidence entre position discrète réelle et position discrète préprogrammée n'est pas obtenue dans un délai prédéterminé. Cette position est par exemple une position correspondant à une fonction du type feu de croisement, pour éviter tout éblouissement non voulu du conducteur arrivant en sens inverse.

De préférence, le procédé de commande comprend aussi une étape d'initialisation, où l'actionneur déplace automatiquement le cache mobile jusqu'à une position discrète de référence. Cette initialisation peut se faire à chaque démarrage du véhicule ou à chaque allumage du projecteur par le conducteur, par exemple. Si l'initialisation se fait quand le projecteur est allumé, le détecteur optique est capable de travailler : le cache est alors commandé pour aller vers la position discrète la plus proche, puis le détecteur et les moyens de comparaison ad hoc permettent de déterminer la position réelle du cache, sans qu'il soit nécessaire de faire passer le cache dans une position de référence. Si l'initialisation se fait projecteur éteint, l'initialisation peut se faire en commandant le mouvement du cache jusqu'à une position de référence prédéterminée.

L'invention a également pour objet le véhicule muni d'un tel dispositif ou procédé de commande.

L'invention sera détaillée ci-après avec des exemples non limitatifs, à l'aide des figures suivantes :
- fig.1 : une représentation schématique des différents faisceaux à coupure qui peuvent être obtenus grâce au module optique selon l'invention
- fig. 2 : une vue en coupe suivant un plan longitudinal vertical d'un exemple de réalisation d'un module optique selon l'invention
- fig. 3 : une vue en coupe suivant un plan longitudinal horizontal d'un exemple de réalisation d'un module optique selon l'invention
- fig . 4 : une représentation détaillée de la forme supérieure du cache mobile des figures précédentes
- fig.5 : une vue en perspective du cache mobile du module optique selon la figure 2, monté sur un moteur l'entraînant en rotation
- fig. 6 : un schéma de la logique de commande selon l'invention du mouvement du cache mobile du module optique représenté à la figure 2 notamment
- fig. 7 : les données préprogrammées utilisées dans l'application de la logique de commande selon la figure 6

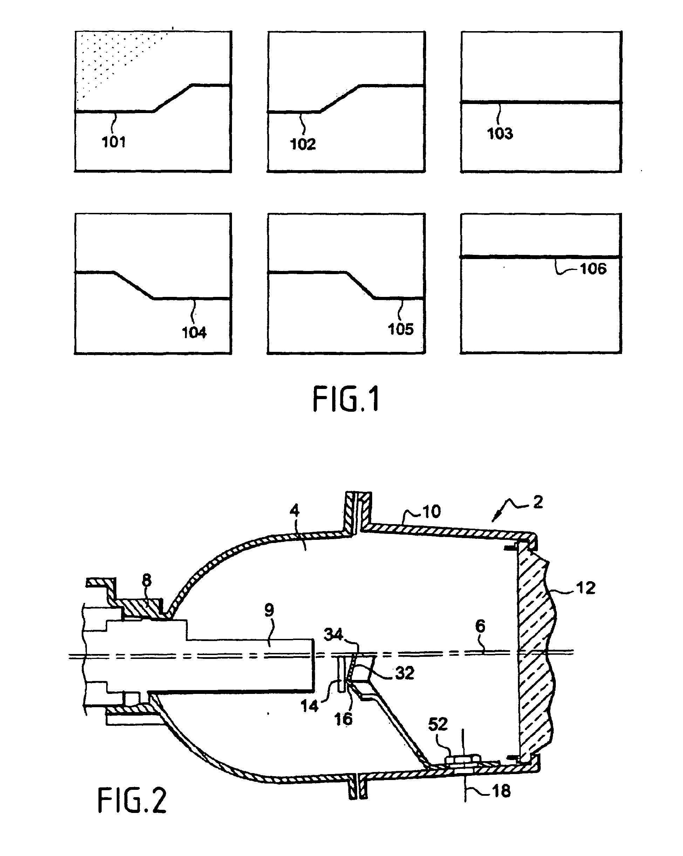

La figure 1 représente à titre d'exemple et de façon schématique quatre projections sur une surface plane et verticale de différents faisceaux lumineux que l'on peut obtenir avec un seul module optique utilisant un cache mobile. La surface plane de projection est disposée face au dispositif projecteur considéré, perpendiculairement à son axe optique. On a ainsi représenté une première coupure 101, correspondant à un faisceau code en trafic à droite, une deuxième coupure 102, correspondant à un faisceau d'autoroute en trafic à droite, une troisième coupure 103, correspondant à un faisceau de ville ou anti brouillard, une quatrième coupure 104, correspondant à un faisceau code en trafic à gauche, une cinquième coupure 105, correspondant à un faisceau d'autoroute en trafic à gauche, et une sixième coupure 106, correspondant à un faisceau route.

L'exemple représenté, sous différentes vues et, selon les figures, de façon plus ou moins détaillée, montre un module optique elliptique 2 selon l'invention. Il comporte une source lumineuse 9 produisant un faisceau lumineux, un réflecteur 4 dont une partie permet d'assurer une concentration de lumière au voisinage de l'écran, par exemple en forme essentiellement d'un ellipsoïde. L'axe longitudinal horizontal 6 forme une direction principale d'éclairage, ou axe optique, du projecteur. Le projecteur comporte un porte-lampe 8 fixé au réflecteur 4 en partie arrière de celui-ci, un porte-lentille 10 fixé en partie avant du réflecteur, et une lentille 12 fixée en partie avant du porte-lentille 10, un plan focal de la lentille passant au voisinage d'un deuxième foyer du réflecteur. Le porte-lampe 8, le réflecteur 4, le porte-lentille 10, et la lentille 12 se succèdent le long de l'axe optique 6 du module. Le réflecteur 4 et le porte-lentille 10 constituent un bâti du dispositif projecteur 2, qui peut par ailleurs comprendre un boîtier renfermant l'ensemble des éléments qui viennent d'être mentionnés.

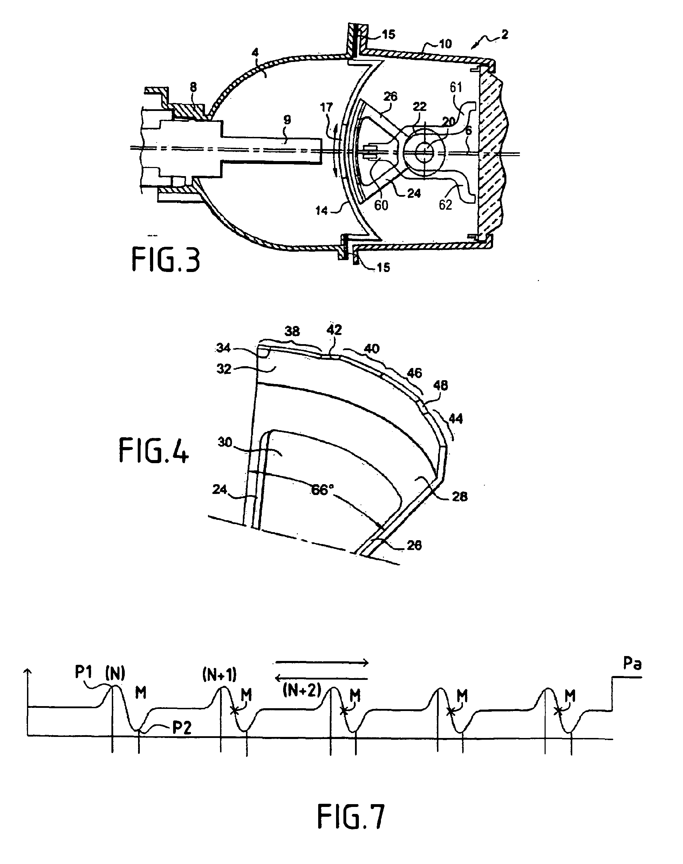

Le module 2 comporte un écran 14, rigidement fixé au bâti. L'écran 14 a une forme courbe, de section sensiblement cylindrique à génératrice verticale et centre de courbure situé vers l'avant du projecteur. L'écran 14 s'étend verticalement sur une faible hauteur et horizontalement sur environ toute la largeur du réflecteur 4. Il présente une extrémité supérieure horizontale s'étendant, de part et d'autre de l'axe 6, à 0,5 pour cent au-dessous de l'axe 6, par référence au foyer de la lentille 12. Au niveau de l'axe 6, l'extrémité supérieure de l'écran 14 présente un décrochement 17, visible à la figure 3, d'environ 1 centimètre de profondeur, et sur une portion de l'extrémité supérieure correspondant à un angle d'environ 30 degrés en considérant que l'extrémité supérieure décrit une forme assimilable à un arc de cercle. L'écran est fixé par deux pattes latérales 15 pincées entre les bords du réflecteur 4 et du porte-lampe 8. Il permet d'éviter tout risque d'éblouissement d'un conducteur croisé lors du mouvement d'un cache 16 mobile autour d'un axe de rotation 18 sensiblement vertical. Le cache 16 est amené, lors de sa rotation, à passer devant le décrochement 17, et à le combler dans la plupart des positions que peut adopter le cache 16.

Le cache 16 comporte, dans l'exemple décrit, un anneau 22 formant une base du cache 16, centré sur l'axe de rotation 18 et présentant une ouverture centrale 20 ; une première patte 24 et une deuxième patte 26, fixées à l'anneau 22, s'éloignent d'un plan de base défini par l'anneau, par exemple selon un angle compris entre 40 et 50 degrés par rapport à ce plan de base. Les deux pattes 24 et 26 se rejoignent à une première extrémité au niveau de l'anneau 22, et à une deuxième extrémité par l'intermédiaire d'un élément de support 28, approximativement contenu dans un plan défini par les deux pattes 24 et 26. Ces dernières laissent donc un espace vide 30 entre elles. Leur écartement est par exemple compris entre 60 et 70 degrés.

La forme du bord supérieur 34 du cache est plus particulièrement détaillée à la figure 4. Dans cet exemple, le bord supérieur 34 est constitué d'une première portion 36, située sur la partie gauche du bord supérieur 34, et d'une deuxième portion 37, située sur la partie droite du bord supérieur 34.

La première portion 36 et la deuxième portion 37 ne se recouvrent pas mais se succèdent directement sur le bord supérieur 34. La première portion 36 présente, en partant de l'extrémité gauche du bord supérieur 34, successivement une première zone plane 38 située à un premier niveau, et une seconde zone plane 40 située à un second niveau supérieur au premier niveau, une première zone oblique 42 assurant la transition entre la première zone plane 38 et la seconde zone plane 40. La deuxième portion 37 présente, en partant de l'extrémité droite du bord supérieur 34, successivement une première zone plane 44 située au premier niveau, et, dans le prolongement de la seconde zone plane 40 de la première portion 36, une seconde zone plane 46 située au second niveau, une deuxième zone oblique 48 assurant la transition entre la première zone plane 44 et la seconde zone plane 46.

Chacune des portions 36 et 37 décrit une forme courbe de mesure d'angle égale à environ 30 degrés en considérant que le bord supérieur décrit une forme assimilable à un arc de cercle. Ainsi, lorsqu'une des portions est amenée par rotation autour de l'axe 18, en regard du décrochement 17, elle crée une ligne de coupure qui lui est propre.

Dans l'exemple représenté, si on adopte comme position centrale du cache une position dans laquelle le point de jonction entre la zone 40 et la zone 46 est placé en regard d'une position centrale du décrochement 17, on peut obtenir les différents faisceaux projecteurs suivants :
- position centrale : faisceau coupure plate 103, la dimension des zones 40 et 46 étant suffisantes pour combler en longueur la totalité du décrochement 17 ;
- rotation de 13,5 degrés environ autour de l'axe 18 : faisceau d'autoroute en trafic à droite 102, une petite partie de la zone 40 et une partie importante de la portion 37 comblant en longueur la totalité du décrochement 17 ;
- rotation de 15 degrés environ autour de l'axe 18 : faisceau trafic à droite 101, la portion 37 comblant en longueur la totalité du décrochement 17 ;
- rotation de -13,5 degrés environ autour de l'axe 18 : faisceau d'autoroute en trafic à gauche 105, une petite partie de la zone 46 et une partie importante de la portion 36 comblant en longueur la totalité du décrochement 17 ;
- rotation de -15 degrés environ autour de l'axe 18 : faisceau trafic à gauche 104, la portion 36 comblant en longueur la totalité du décrochement 17 ;
- rotation supérieure à environ 30 degrés, ou inférieure à environ 30 degrés autour de l'axe 18 : faisceau route ; on constate que, dans l'exemple selon l'invention, on dispose donc de deux positions distinctes du cache 16 pour obtenir un faisceau route ; ce dernier est donc directement accessible, sans passer par des étapes intermédiaires correspondant à d'autres faisceaux, que le cache soit positionné dans une configuration de trafic à gauche ou de trafic à droite.

On constate que, grâce à la succession astucieuse des zones 38, 40, 44 et 46, on obtient jusqu'à six faisceaux distincts grâce au cache 16, qui est de plus de faible dimension, et dont le mouvement s'effectue simplement autour de l'unique axe de rotation 18.

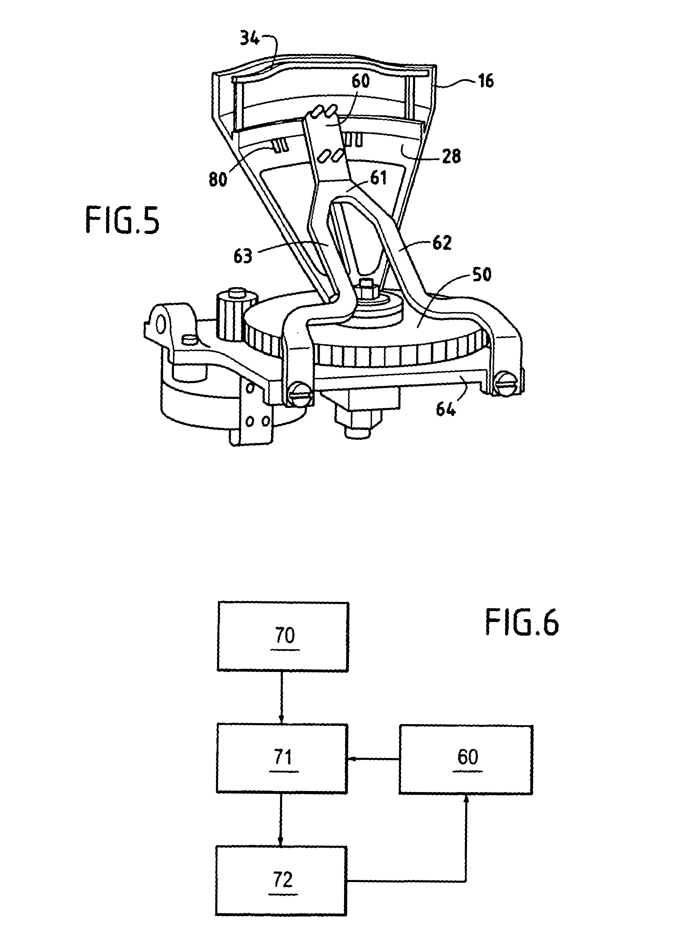

Dans un exemple de réalisation, le cache 16 est entraîné en rotation par un actionneur, par exemple un moteur de type moteur à pas à pas 50 visible à la figure 5, comportant par exemple 96 pas. Le moteur peut être disposé à l'intérieur du dispositif projecteur, ou sous le porte-lentille 10. Il est maintenu au moyen d'un système de fixation faisant par exemple intervenir un écrou 52. Son fonctionnement est géré par un microcontrôleur, dans lequel on a préalablement mémorisé des positions particulières du cache 16, notamment les six positions qui viennent d'être décrites. Le positionnement du cache 16 dans l'une des positions préalablement mémorisées est contrôlable par le conducteur depuis le tableau de bord du véhicule.

Plus de détails sur la structure et le fonctionnement général d'un tel module peuvent être trouvés dans le brevet FR 04 06273 auquel on pourra se reporter, qui décrit un cache très proche structurellement du cache décrit dans ce brevet.

Le module selon l'invention présente un cache qui est cependant amélioré dans son mode de commande par rapport à celui décrit dans le brevet FR 04 06273. Structurellement, au niveau du cache, deux modifications ont été apportées afin de mettre en oeuvre ce nouveau mode de commande
- d'une part l'élément de support 28 du cache est percé longitudinalement d'une série de 5 trous 80, chacun à l'aplomb de chaque changement de direction du profil du bord supérieur du cache. Pour la position route, aucune marque n'est nécessaire, car c'est la saturation en lumière du détecteur qui caractérisera le passage du cache en faisceau route. Chacun de ne perturbe pas les rayons lumineux émis par la source lumineuse ou réfléchis par le réflecteur, puisqu'ils se situent dans une zone inactive optiquement du cache, une zone non occultante.
- d'autre part, on prévoit un détecteur optique : une photodiode différentielle 60, qui, selon le sens de l'axe optique 6, se situe après le cache, et qui est fixé à un bâti fixe 64 dans le module de façon à ce qu'il se trouve en face des trous 80 en zone 28 mentionnés plus haut. On peut utiliser tout moyen de fixation mécanique approprié. Ce détecteur 60, visible aux figures 3 et 5 (non représenté pour des raisons de clarté à la figure 2) est par exemple fixé à l'aide d'une pièce mécanique 61 présentant deux bras 62, 63 venant se fixer par vissage ou tout autre moyen mécanique sur une platine 64 sur laquelle peut également être monté l'actionneur 50.

Le mode de commande exploite les données recueillies par le détecteur est explicité à l'aide des figures 6 et 7 :
- Une unité de contrôle 70 déclenche la commande (de façon manuelle, par le conducteur, ou de façon automatisée) du passage de l'écran mobile d'une position discrète (N) où il se trouve à une position discrète (N+2). Le cache doit donc parcourir le trajet de la position (N) à la position (N+1), puis de la position (N+1) à la position (N+2)
- La commande est transmise à des moyens de comparaison 71 du type circuit intégré où ont été préalablement mémorisées les positions discrètes du cache
- Puis la commande est transmise au micro contrôleur 72 de l'actionneur 50, de façon à déclencher le mouvement du cache

Pendant la phase de mouvement du cache de la position, (N) à la position (N+2), le capteur 60 détecte l'apparition des trous 80 pratiqués dans le support 28 du cache, et qui sont caractéristiques des positions discrètes (N+1) puis (N+2) qui défilent en face de lui. Dès qu'il détecte l'arrivée du cache en position (N+1), cette donnée est transmise aux moyens de comparaison 71 pour vérifier la conformité de la position réelle du cache par rapport à sa position mémorisée. Cette comparaison est faite à nouveau quand le détecteur détecte l'arrivée du cache dans sa position (N+2). Si la position réelle et la position mémorisée coïncident, l'information remonte au microcontrôleur 72 de l'actionneur 50, qui stoppe alors le mouvement du cache.

Au cas où la comparaison de la position intermédiaire réelle (N+1) ou de la position finale voulue (N+2) conduisent à une incohérence, ou si le capteur ne détecte aucune marque de la position (N+1) ou (N+2) dans un délai préfixé, le système de commande peut basculer en mode de défaillance, le micro contrôleur déplaçant alors automatiquement le cache vers une position (S) de sécurité choisie à l'avance, par exemple celle correspondant au croisement trafic à droite.

La figure 7 montre ainsi un graphe indiquant le schéma préprogrammé dans les moyens de comparaison 71 : chaque passage devant une marque M se traduit par un pic positif P1, suivi par un pic négatif P2, le point d'inflexion M de la courbe allant du sommet du pic positif au sommet du pic négatif indiquant l'exacte position où doit se trouver le cache dans une position discrète. En ce qui concerne la détection de la position route, elle se traduit par deux paliers Pa, dont seul un est représenté : le cache ne se trouvant plus devant le détecteur optique en position route, le détecteur sature en lumière. Les flèches indiquent les deux sens possibles de défilement du cache.

La tolérance acceptable dans la coïncidence du positionnement réel du cache détecté par le capteur et le positionnement mémorisé dans les moyens de comparaison est également à prédéterminer à l'avance. Mais l'invention a l'avantage majeur de permettre une détermination de la position réelle du cache, et pas d'éléments distants ou distincts du cache : ce que lit le capteur est la position réelle du cache optique affectant directement le faisceau lumineux.

Comme indiqué plus haut, ce mode de commande n'est qu'un exemple non limitatif et peut présenter différentes variantes dans ses étapes. En outre, il peut s'appliquer à tout type de cache, des plus simples à deux positions discrètes, aux plus complexes à quatre positions discrètes ou plus. Il s'applique quel que soit le type de mouvement du cache, que ce soit un mouvement de type translation, rotation ou pivotement ou tout mouvement complexe comprenant une succession d'au moins deux de ces mouvements. Il permet aussi de conserver des actionneurs de cache simples et économiques du type moteur pas à pas, sans renoncer à une grande fiabilité et une grande sûreté dans le contrôle du mouvement du cache : on n'a même plus besoin d'un système de comptage des pas du moteur, puisque le suivi des marques sur le cache peut suffire à connaître le positionnement du cache

Enfin, l'invention peut s'appliquer de façon plus générale à tout mouvement de pièces mobiles dans un projecteur, dans la mesure où il s'agit de mouvements selon des positions discrètes.

## Revendications

1. Module optique (2) comprenant au moins une source lumineuse (9) associée à au moins un réflecteur (4) et au moins un cache mobile (16) apte à présenter au moins deux positions discrètes différentes au sein du module de façon à ce que ledit module génère au moins deux faisceaux lumineux correspondant de photométries différentes **caractérisé en ce que** le suivi du positionnement dudit cache mobile utilise un système de marques (80) pratiquées directement sur ledit cache mobile (16) ou sur son support mobile associé (28).

2. Module selon la revendication 1, **caractérisé en ce que** les marques sont des orifices (80) pratiqués sur le cache mobile (16) ou sur son support associé (28), chaque orifice ou groupement d'orifices donné correspondant à une position discrète donnée du cache.

3. Module selon la revendication 2, **caractérisé en ce que** les marques de type orifices (80) sont réparties successivement sur la longueur du cache mobile (16) ou de son support mobile associé (28).

4. Module selon la revendication 3, **caractérisé en ce que** toutes les marques (80) ou groupements de marque sont identiques ou servent à un codage optique distinct de chaque position discrète du cache (16).

5. Module selon l'une des revendications précédentes, **caractérisé en ce que** le cache mobile (16) est mû par un actionneur (50), du type moteur pas à pas, moteur piézoélectrique ou moteur à courant continu, qui est piloté par une unité de commande (70) de type manuelle ou automatique.

6. Module selon l'une des revendications précédentes, **caractérisé en ce qu**'il comprend au moins un capteur optique (60), du type photodiode différentiel, apte à détecter la présence des marques (80) sur l'écran mobile (16) ou sur son support associé (28).

7. Module selon la revendication précédente, **caractérisé en ce que** le capteur (60)est monté sur un bâti (64) fixe par rapport au cache (16), de préférence du côté du cache mobile qui est opposé au côté faisant face à la source lumineuse (9).

8. Module selon l'une des revendications précédentes, **caractérisé en ce que** le cache (16) est monté mobile en rotation par rapport à un axe incliné par rapport à la verticale ou par rapport à un axe principal d'éclairage.

9. Module selon l'une des revendications précédentes, **caractérisé en ce que** ledit cache (16) présente un « bord actif » (34) composé d'un ensemble de portions distinctes (38,42,40,46,48,44), au moins une partie d'une desdites portions intervenant pour définir au moins deux faisceaux lumineux de photométries différentes.

10. Module selon l'une des revendications précédentes, **caractérisé en ce que** le cache (16), suivant sa position dans le module, est apte à définir au moins deux des faisceaux suivants : faisceau de croisement en trafic à droite, faisceau de croisement en trafic à gauche, faisceau de ville, faisceau anti-brouillard, faisceau de route, faisceau pour conduite sur autoroute.

11. Dispositif d'éclairage du type projecteur pour automobile comprenant au moins un module optique (2) selon l'une des revendications précédentes.

12. Dispositif de commande du mouvement d'un écran mobile d'un module optique (2), ledit module comprenant au moins une source lumineuse (9) associée à au moins un réflecteur (4) et audit cache mobile (16), ledit cache mobile étant apte à présenter au moins deux positions discrètes différentes de façon à ce que ledit module génère au moins deux faisceaux lumineux correspondants de photométries différentes, **caractérisé en ce que** ledit dispositif de commande utilise :
- un organe de commande (70) fonctionnant en mode manuel et/ou en mode automatique
- un actionneur (50)de type moteur pas à pas apte à mouvoir le cache mobile d'une position discrète à une autre
- un système de marquage (80) du cache mobile (16) ou de son support mobile (28) associé comprenant des marques ou groupements de marques associé(e)s à au moins, notamment à chaque, position discrète du cache mobile
- un détecteur optique (60) apte à détecter les marques (80) du cache mobile ou de son support associé mobile, notamment dans les phases de mouvement du cache d'une position discrète vers une autre
- des moyens électroniques de comparaison (71) , du type circuit intégré, aptes à comparer les données réelles détectées par le capteur à des données de référence.

13. Procédé de commande du mouvement d'un écran mobile (16) d'un module optique (2), ledit module comprenant au moins une source lumineuse (9) associée à au moins un réflecteur (4) et audit cache mobile, ledit cache mobile étant apte à présenter au moins deux positions discrètes différentes de façon à ce que ledit module génère au moins deux faisceaux lumineux correspondants de photométries différentes, **caractérisé en ce que** ledit procédé comporte au moins une étape de détection optique de marques (80) pratiquées directement sur le cache mobile (16) ou sur son support mobile associé (28).

14. Procédé selon la revendication précédente, **caractérisé en ce qu**'il comprend les étapes suivantes :
- commande de déplacement du cache mobile (16) vers une position discrète donnée (N+2),
- déplacement du cache mobile par l'actionneur (50) suivant la commande de déplacement,
- détection du passage du cache d'une position discrète (N) à la position discrète suivante (N+1) par détection optique de marques (80) pratiquées directement sur le cache mobile ou sur son support mobile associé.
- comparaison entre la position discrète réelle du cache obtenue par la détection optique et la position discrète préprogrammée conforme à la commande lors du déplacement du cache d'une position discrète à une autre, jusqu'à ce que les deux positions coïncident
- arrêt du déplacement du cache (16) par l'actionneur (50) quand la position discrète réelle du cache mobile et la position discrète pré programmée conforme à la commande coïncident, ou passage en mode de défaillance du cache

15. Procédé selon la revendication 13 ou la revendication 14, **caractérisé en ce qu**'il comprend aussi une étape d'initialisation où soit l'actionneur (50) déplace automatiquement le cache mobile jusqu'à une position discrète de référence, soit il le déplace jusqu'à la position discrète la plus proche de sa position réelle.

16. Procédé selon la revendication 13, **caractérisé en ce que** le mode de défaillance comporte une étape où l'actionneur(50) déplace automatiquement le cache mobile (16) jusqu'à une position discrète de sécurité quand la coïncidence entre position discrète réelle et position discrète pré programmée n'est pas obtenue dans un délai prédéterminé.

## Claims

1. Optical module (2) comprising at least one light source (9) which is associated with at least one reflector (4) and at least one movable shield (16) which can have at least two different discrete positions within the module, such that the said module generates at least two corresponding light beams with different photometries, **characterised in that** the monitoring of the positioning of the said movable shield uses a system of markers (80) which are provided directly on the said movable shield (16) or on its associated movable support (28).

2. Module according to claim 1, **characterised in that** the markers are apertures (80) which are provided on the movable shield (16) or on its associated support (28), each given aperture or group of apertures corresponding to a given discrete position of the shield.

3. Module according to claim 2, **characterised in that** the markers of the aperture type (80) are distributed in succession along the length of the movable shield (16) or its associated movable support (28).

4. Module according to claim 3, **characterised in that** all the markers (80) or groups of markers are identical, or are used for distinct optical coding of each discrete position of the shield (16).

5. Module according to any one of the preceding claims, **characterised in that** the movable shield (16) is moved by an actuator (50) of the type consisting of a step-by-step motor, a piezoelectric motor or a direct current motor, which is piloted by a control unit (70) of a manual or automatic type.

6. Module according to any one of the preceding claims, **characterised in that** it comprises at least one optical sensor (60) of the differential photodiode type, which can detect the presence of the markers (80) on the movable shield (16) or on its associated support (28).

7. Module according to the preceding claim, **characterised in that** the sensor (60) is fitted on a frame (64) which is fixed relative to the shield (16), preferably on the side of the movable shield which is opposite the side which faces the light source (9).

8. Module according to any one of the preceding claims, **characterised in that** the shield (16) is fitted such as to be movable in rotation relative to an axis which is inclined relative to the vertical or relative to a main lighting axis.

9. Module according to any one of the preceding claims, **characterised in that** the said shield (16) has an "active edge" (34) consisting of an assembly of distinct portions (38, 42, 40, 48, 48, 44), at least part of one of the said portions intervening in order to define at least two light beams with different photometries.

10. Module according to any one of the preceding claims, **characterised in that** according to its position in the module, the shield (16) can define at least two of the following beams:
low beam for right-hand traffic, low beam for left-hand traffic, beam for townlighting, anti-fog beam, full beam, motorways beam.

11. Lighting device of the type which is a headlight for a motor vehicle, comprising at least one optical module (2) according to one of the preceding claims.

12. Device for controlling the movement of a movable screen of an optical module (2), the said module comprising at least one light source (9) which is associated with at least one reflector (4) and with the said movable shield (16), the said movable shield being able to have at least two different discrete positions, such that the said module generates at least two corresponding light beams with different photometries, **characterised in that** the said control device uses:
- a control unit (70) which functions in manual mode and/or in automatic mode;
- an actuator (50) of the step-by-step motor type which can move the movable shield from one discrete position to another;
- a marker system (80) for the movable shield (16) or its associated movable support (28), comprising markers or groups of markers which are associated with at least one, and in particular with each, discrete position of the movable shield; an optical sensor (60) which can detect the markers (80) of the movable shield or of its associated movable support, in particular in the phases of movement of the shield from one discrete position to another;
- electronic comparison means (71) of the integrated circuit type, which can compare the real data detected by the sensor with reference data.

13. Method for controlling the movement of a movable screen (16) of an optical module (2), the said module comprising at least one light source (9) which is associated with at least one reflector (4) and with the said movable shield, the said movable shield being able to have at least two different discrete positions, such that the said module generates at least two corresponding light beams with different photometries, **characterised in that** the said method comprises at least one step of optical detection of markers (80) provided directly on the movable shield (16) or on its associated movable support (28).

14. Method according to the preceding claim, **characterised in that** it comprises the following steps:
- control of displacement of the movable shield (16) to a given discrete position (N+2);
- displacement of the movable shield by the actuator (50) according to the displacement command;
- detection of the passage of the shield from one discrete position (N) to the following discrete position (N+1) by means of optical detection of markers (80) which are provided directly on the movable shield or on its associated movable support;
- comparison of the real discrete position of the shield, obtained by means of optical detection, and the pre-programmed discrete position in conformity with the command, during displacement of the shield from one discrete position to another, until the two positions coincide;
- stoppage of the displacement of the shield (16) by the actuator (50) when the real discrete position of the movable shield and the pre-programmed discrete position in conformity with the command coincide, or transition to the default mode of the shield.

15. Method according to claim 13 or claim 14, **characterised in that** it also comprises an initialisation step in which either the actuator (50) displaces the movable shield automatically to a discrete reference position, or it displaces it to the discrete position which is closest to its real position.

16. Method according to claim 13, **characterised in that** the default mode comprises a step in which the actuator (50) displaces the movable shield (16) automatically to a discrete safety position when the coincidence between the real discrete position and the pre-programmed discrete position is not obtained within a predetermined period.

## Patentansprüche

1. Optikmodul (2) mit wenigstens einer Lichtquelle (9), die wenigstens einem Reflektor (4) zugeordnet ist, und wenigstens einer beweglichen Blende (16), die innerhalb des Moduls wenigstens zwei verschiedene diskrete Positionen einzunehmen vermag, derart, dass das Modul wenigstens zwei entsprechende Lichtbündel mit unterschiedlicher Lichtverteilung erzeugt,
**dadurch gekennzeichnet, dass** zur Positionierungsüberwachung der beweglichen Blende ein System von Markierungen (80) verwendet wird, die unmittelbar auf der beweglichen Blende (16) oder auf der ihr zugehörigen beweglichen Halterung (28) ausgebildet sind.

2. Modul nach Anspruch 1,
**dadurch gekennzeichnet, dass** die Markierungen Öffnungen (80) sind, die auf der beweglichen Blende (16) oder auf der ihr zugehörigen Halterung (28) ausgebildet sind, wobei jede gegebene Öffnung oder Gruppe von Öffnungen einer gegebenen diskreten Position der Blende entspricht.

3. Modul nach Anspruch 2,
**dadurch gekennzeichnet, dass** die Markierungen vom Typ Öffnungen (80) aufeinanderfolgend über die Länge der beweglichen Blende (16) oder der ihr zugehörigen beweglichen Halterung (28) verteilt sind.

4. Modul nach Anspruch 3,
**dadurch gekennzeichnet, dass** alle Markierungen (80) oder Markierungsgruppen identisch sind oder zu einer unterschiedlichen optischen Kodierung jeder diskreten Position der Blende (16) dienen.

5. Modul nach einem der vorhergehenden Ansprüche,
**dadurch gekennzeichnet, dass** die bewegliche Blende (16) durch ein Stellglied (50) vom Typ eins Schrittmotors, piezoelektrischen Motors oder Gleichstrommotors verlagert wird, das durch eine Steuereinheit (70) manueller oder automatischer Art gesteuert wird.

6. Modul nach einem der vorhergehenden Ansprüche,
**dadurch gekennzeichnet, dass** es wenigstens einen optischen Sensor (60) vom Typ einer Differential-Fotodiode umfasst, der das Vorhandensein von Markierungen (80) auf der beweglichen Blende (16) oder auf der ihr zugehörigen Halterung (28) zu erkennen vermag.

7. Modul nach dem vorhergehenden Anspruch,
**dadurch gekennzeichnet, dass** der Sensor (60) auf einer bezüglich der Blende (16) feststehenden Platte (64) angebracht ist, vorzugsweise auf der Seite der beweglichen Blende, die der der Lichtquelle (9) zugewandten Seite entgegengesetzt ist.

8. Modul nach einem der vorhergehenden Ansprüche,
**dadurch gekennzeichnet, dass** die Blende (16) bezüglich einer zur Vertikalen oder zu einer Hauptbeleuchtungsachse schrägen Achse drehbeweglich gelagert ist.

9. Modul nach einem der vorhergehenden Ansprüche,
**dadurch gekennzeichnet, dass** die Blende (16) einen "aktiven Rand " (34) aufweist, der aus einer Reihe unterschiedlicher Abschnitte (38, 42, 40, 46, 48, 44) zusammengesetzt ist, wobei wenigstens ein Teil eines dieser Abschnitte mitwirkt, um wenigstens zwei Lichtbündel mit unterschiedlicher Lichtverteilung zu bilden.

10. Modul nach einem der vorhergehenden Ansprüche,
**dadurch gekennzeichnet, dass** die Blende (16) je nach ihrer Stellung in dem Modul wenigstens zwei der folgenden Lichtbündel zu bilden vermag: Abblendlicht für Rechtsverkehr, Abblendlicht für Linksverkehr, Stadtlicht, Nebellicht, Fernlicht, Autobahnlicht.

11. Beleuchtungsvorrichtung vom Typ eines Fahrzeugscheinwerfers, mit wenigstens einem Optikmodul (2) nach einem der vorhergehenden Ansprüche.

12. Vorrichtung zum Steuern der Verlagerung einer beweglichen Blende in einem Optikmodul (2), wobei das Modul wenigstens eine Lichtquelle (9) umfasst, die wenigstens einem Reflektor (4) und der beweglichen Blende (16) zugeordnet ist, wobei die bewegliche Blende wenigstens zwei verschiedene diskrete Positionen einzunehmen vermag, derart, dass das Modul wenigstens zwei entsprechende Lichtbündel mit unterschiedlicher Lichtverteilung erzeugt,
**dadurch gekennzeichnet, dass** die Steuervorrichtung einsetzt:
- ein manuell oder automatisch betriebenes Steuerorgan (70),
- ein Stellglied (50) vom Typ eines Schrittmotors, das die bewegliche Blende aus einer diskreten Position in eine andere zu verlagern vermag,
- ein Markierungssystem (80) der beweglichen Blende (16) oder der ihr zugehörigen beweglichen Halterung, mit Markierungen oder Gruppen von Markierungen, die wenigstens und insbesondere jeder diskreten Position der beweglichen Blende zugeordnet sind,
- ein optischer Detektor (60), der die Markierungen (80) der beweglichen Blende oder der ihr zugehörigen Halterung zu erkennen vermag, insbesondere in den Phasen, in denen die Blende aus einer diskreten Position in eine andere verlagert wird,
- elektronische Vergleichsmittel (71) vom Typ einer integrierten Schaltung, welche die tatsächlich von dem Sensor erfassten Werte mit Bezugswerten zu vergleichen vermag.

13. Verfahren zum Steuern der Verlagerung einer beweglichen Blende (16) eines Optikmoduls (2), wobei das Modul wenigstens eine Lichtquelle (9) umfasst, die wenigstens einem Reflektor (4) und der beweglichen Blende zugeordnet ist, wobei die bewegliche Blende wenigstens zwei verschiedene diskrete Positionen einzunehmen vermag, derart, dass das Modul wenigstens zwei entsprechende Lichtbündel mit unterschiedlicher Lichtverteilung erzeugt,
**dadurch gekennzeichnet, dass** das Verfahren wenigstens einen Schritt zur optischen Erkennung von Markierungen (80) umfasst, die unmittelbar auf der beweglichen Blende (16) oder auf der ihr zugehörigen beweglichen Halterung (28) ausgebildet sind.

14. Verfahren nach einem der vorhergehenden Ansprüche,
**dadurch gekennzeichnet, dass** es die folgenden Schritte umfasst:
- Steuern der Verlagerung der beweglichen Blende (16) in eine gegebene diskrete Position (N+2),
- Verlagern der beweglichen Blende durch das Stellglied (50) entsprechend der Verlagerungssteuerung,
- Erkennen des Wechsels der Blende aus einer diskreten Position (N) in eine darauffolgende diskrete Position (N+1) durch optische Erkennung von unmittelbar auf der beweglichen Blende oder auf der ihr zugehörigen beweglichen Halterung ausgebildeten Markierungen (80),
- Vergleichen der durch die optische Erkennung erhaltenen tatsächlichen diskreten Blendenposition mit der entsprechend der Steuerung der Blendenverlagerung aus einer Position in eine andere vorprogrammierten diskreten Position solange, bis beide Positionen übereinstimmen,
- Stoppen der Verlagerung der Blende (16) durch das Stellglied (50), wenn die tatsächliche diskrete Position der beweglichen Blende und die entsprechend der Steuerung vorprogrammierte diskrete Position übereinstimmen, oder Wechsel in den Blendenstörmodus.

15. Verfahren nach Anspruch 13 oder Anspruch 14,
**dadurch gekennzeichnet, dass** es ferner einen Initialisierungsschritt umfasst, bei dem das Stellglied (50) entweder die bewegliche Blende automatisch bis zu einer diskreten Bezugsposition verlagert oder sie bis zu der ihrer tatsächlichen Position nächstgelegenen diskreten Position verlagert.

16. Verfahren nach Anspruch 13,
**dadurch gekennzeichnet, dass** der Störmodus einen Schritt umfasst, bei dem das Stellglied (50) die bewegliche Blende (16) automatisch bis zu einer diskreten Sicherheitsposition verlagert, wenn die Übereinstimmung zwischen der tatsächlichen diskreten Position und der vorprogrammierten diskreten Position nicht innerhalb einer vorbestimmten Zeitspanne erreicht wird.
